# EUROPEAN PATENT SPECIFICATION

(11) **EP 2 549 861 B1**
(45) Date of publication and mention of the grant of the patent: **10.10.2018**
(21) Application number: 11760119.5
(22) Date of filing: 23.03.2011
(51) Int. Cl.: A01K 85/18

(54) **CONVERTIBLE FISHING LURE ASSEMBLY**
UMRÜSTBARE ANGELKÖDERANORDNUNG
ENSEMBLE FORMANT LEURRE DE PÊCHE CONVERTIBLE

(30) Priority: 23.03.2010 US 661730
(43) Date of publication of application: 30.01.2013
(73) Proprietor: Burdick Consulting Services LLC, Biscayne Park, FL 33161 (US)
(72) Inventor: BURDICK, Jon Scott, Miami, FL 33161 (US)
(74) Representative: Wagner & Geyer
(86) International application number: PCT/US2011/029564
(87) International publication number: WO 2011/119688

(56) References cited:
- FR-A- 1 148 408
- FR-A1- 2 409 697
- US-A- 2 563 282
- US-A- 4 010 569
- US-A- 4 121 366
- US-A- 4 611 422
- US-A- 4 796 375
- US-A- 5 953 849
- US-A- 6 058 643
- US-B1- 6 922 938
- US-B1- 6 922 938

## Description

### BACKGROUND OF THE INVENTION

### Field of the Invention

This invention is directed to a convertible fishing lure assembly including at least one body section having an elongated channel dimensioned and configured to removably receive a securing member therein. The securing member is at least partially removed from the channel of the body section and disposed and structured for selective and removable attachment of various tackle components, thereby facilitating the quick and efficient conversion of the structure, performance characteristics and/or appearance of the fishing lure assembly to accommodate the conditions and/or environment in which the fishing lure assembly is used.

### Description of the Related Art

Fishing lures are commercially available in an extremely large variety of sizes, shapes, structures and appearances and are typically manufactured to display certain performance characteristics when used. By way of example, many lures, such as, but not limited to, those lures used by commercial and recreational fishermen for in-line trolling, are structured to be slidably mounted on a leader which is connected to the fishing line. One or more hook assembly is connected to the fishing line at the trailing end of the fishing lure utilizing any of plurality of fishing tackle components, such as snaps, swivels, etc., which may be disposed and structured to connect the hook assembly to the leader rather than directly to the body of the lure. The size and position of such connecting tackle components allow them to be used as stops to prevent the lures from sliding off the leaders and to prevent the leaders from being twisted. Therefore, when used, drag forces applied to the hook by a hooked fish is transferred directly from the hook to the leader/fishing line, and the lure does not absorb the force of the fish. In addition, in-line trolling lures of the type generally set forth herein frequently exhibit a free spinning or rotating feature about the supporting leader, wherein such spinning or rotation may add to the attraction of the targeted fish.

When using this type of in-line trolling lure, as well as a variety of other lure structures intended for different fishing environments, it is often desirable to change various structural features of the lure in order to vary the operational or performance characteristics as well as the appearance thereof. By way of example, it is often desirable to change the color of a lure and/or its trailing skirt to compensate for lighting changes caused by depth or weather, or simply when the lure or skirt becomes worn. In making such changes with conventional or known lure assemblies it is common place to cut or detach the leader just above the hook area so that the lure can be removed and replaced with another lure and/or different components of the existing lure such as the aforementioned skirt. After such replacement or conversion, the hook is then resecured to the leader. Such a procedure, while common place, takes a considerable amount of time, and as set forth above, may require cutting and therefore shortening of the leader, which in turn requires the leader itself to eventually be replaced.

Lure assemblies not primarily intended for in-line trolling, such as crank baits which are primarily designed for casting and retrieval, exhibit similar problems. Further, by way of example, such lure assemblies including a plurality of body portions of different shapes and sizes are known, wherein the body portions are replaceable in order to change the appearance and/or "action" of the lure when in use. However, changing, replacing or otherwise altering any of the various components of such a fishing lure body encompasses a number of same type of problems and disadvantages related to the time consuming difficulties in accomplishing the conversion of in-line trolling lures, as well as presenting additional problems. Such replacement or conversion is particularly troublesome during the harsh conditions frequently encountered by fishermen due to the weather and/or water conditions.

In addition to the above, different fishing tackle components such as attachment eyelets, hooks, diving bills, etc., are frequently supplied with and are often securely attached to such crank bait type lures for each of a number of specific intended uses. However, it is also a frequent occurrence that fishing tackle components provided with such lures are not the most desirable for all fishing conditions. As a result, hooks or other tackle components which are fixedly secured to the lure cannot be readily altered, thereby requiring the fishermen to either select a different lure, engage in a time consuming retrofit on location which may often require specialized tools, such as snap ring pliers, or simply settle for a lure which may not be as effective under the existing fishing conditions. Further, lures having a diving bill integrally attached thereto are rendered useless when the diving bill is damaged or broken, such as frequently happens through normal use, as well as through improper storage, i.e., stored together loose with other lures.

Moreover, such lure assemblies typically have the hook assemblies permanently secured thereto which often results in the inadvertent "hooking" of a fishermen or other individual handling the lure, especially during transport of the lure to and from a fishing site. Further, fisherman must now often entrust a collection of expensive lures to the "checked baggage" handlers in an airport, seaport, etc., as constraints on travel continue to be implemented around the world.

In addition, a separate enclosure or container for each lure is desirable in order to prevent the hooks of one lure from becoming entangled with the hooks of other lures during storage and/or transport. As a result, the space requirement to store even a modest number of individual lures can be quite large, which is burdensome when a fisherman desires to bring a number of lures to a fishing site and/or otherwise transport or store the same. The requirement for such a large storage space is evidenced by the commercial availability of extremely large, compartmentalized tackle boxes structured to provide sufficient storage area for a variety of different lures and containers of the type set forth above.

Accordingly there is a significant and recognized need in the area of fishing lures for a convertible fishing lure assembly which is structured to permit quick and easy replacement of a plurality of different tackle components. Further, the needs exists for lure assembly which permit a plurality of hooks and other tackle components to be quickly and easily removed from and attached to a lure body, such that said tackle components may be stored and/or transported separately from the lure bodies, thereby greatly reducing the space requirement to store and/or transport a plurality of lures. Such a proposed convertible lure assembly, while being structured to facilitate the conversion of the structure, performance characteristics, appearance, etc., should also be structured to operate in a stable manner. As such, the lure body should be maintained in a specific, operative orientation and be prevented from spinning, twisting or rotating during fishing. Further, such a convertible lure assembly should not be allowed to freely slide along the leader or fishing line.

In order to accomplish the foregoing structural and operational characteristics, such a convertible fishing lure assembly should also facilitate the interconnection of the leader or fishing line to a hook assembly thereby allowing the force of a fish strike and/or the force of a hooked and fighting fish to be absorbed primarily by the leader and/or fishing line rather than the body of the convertible lure assembly itself. In addition, the unique structural and operative characteristics of such a convertible lure assembly should demonstrate sufficient versatility such that a lure assembly incorporating the aforementioned structural and operational characteristics may be used in trolling or non-trolling configurations, as may be required.

US 2 563 282 A discloses a fish lure which has an elongated body and a detachable and reversible head forming an extension of said body and having an inclined front end.

FR 1 148 408 A discloses a baitfish with internal ballast mass.

US 5 953 849 A discloses a soft, flexible plastic fishing lure body portion which has a cavity into which a removable weight is inserted so that the lure will have a swimming or crank-bait type of action when it is reeled in. The weight and other parts of the lure rigging may be removed from the original lure body portion and reused with other lure bodies if the soft lure body portion becomes damaged or worn out, or when a fisherman wants to change the size, color, shape or action of the lure he is using.

FR 2 409 697 A discloses a lure which has an oblong rectangular section body tapering towards both the front and rear roughly. An apron fixed to the front of the body slopes forwards and downwards, and hooks are accommodated on a removable fitting of corrosion-resistant wire, whose ends are bent over towards each other to form a flattened loop fitting in a central groove. A stirrup encloses the fitting, its arms being accommodated in a vertical hole in the centre of the body, and a locking pin in a transverse hole in the body passes through the stirrup arms. A formation is included to position the fitting in the lengthwise direction.

US 4 121 366 A discloses a central support of piano wire which has a straight center section with a return bend forming a hook receiving eye on its rear end with a locking spur projecting forwardly from the eye. The front end is twisted into a line receiving eye with a stirrup extending from the end of the twist in spaced relation to the center section and terminating in a hook releasably engaged with the center section. Slidably engaged on the wire are spacing elements including a spinner rotatable about the center section, and an elongated body having a longitudinal bore receiving the wire and a weight mass eccentric to the wire. The rear end of the mass defines a longitudinal slot opening radially from the bore and receiving the locking spur in non-rotary engagement when the body and the spacing elements are slid rearwardly on the center section and retained between the hook receiving eye and the hook on the stirrup.

US 4 611 422 A discloses a fishing lure which has a body member attractive to fish and a separable hook track, with suspended hooks, which is slidingly received in a guideway formed along the bottom of the body member. The body member and hook track are secured to the end of a fishing line by separate drop leader lines, the hook track drop leader being shorter than the body member drop leader. If the hooks should snag and tension be applied to the fishing line, the hook track drop leader will tend to break before the body member drop leader, so that when the hook track drop leader is broken away, continued application of tension to the fishing line will cause the body member to slide off of the snagged hook track, allowing the body member to be recovered.

### SUMMARY OF THE INVENTION

The present invention is directed to a fishing lure assembly structured to be convertible at least to the extent of quickly and efficiently adding, removing, and/or replacing one or more fishing tackle components which may be typically connected to or operatively associated with the lure body. As used herein the term "tackle component" is not meant to be interpreted in a limiting since and is intended to refer to any of a plurality of conventional or customized fishing tackle accessories which could be attached or interconnected to a lure body. By way of example only, such tackle components could include, but are not limited to, fishing lines, leaders, hooks, diving bills, swivel and/or snap connectors and other interconnecting structures, as well as a variety of other decorative and/or utilitarian devices which may enhance the structure, performance, appearance and/or use of the lure.

In accordance with the present invention, a fishing lure assembly as set forth in claim 1 is provided. Further embodiments are inter alia disclosed in the dependent claims. More specifically, the convertible lure assembly of the present invention includes a lure body comprising at least one body section. The at least one body section includes an elongated channel extending longitudinally through the interior thereof and terminating in oppositely disposed open ends. The open ends of the interior channel are disposed adjacent to and at least partially define the leading and trailing ends of the at least one body section. In addition, an elongated securing member is removably disposable within the channel and is of sufficient length to extend along the length thereof. As such, the elongated securing member includes oppositely disposed ends, each of which is disposed in communicating, accessible relation adjacent to the corresponding open ends of the interior channel.

Moreover, the opposite ends of the securing member are accessible at corresponding ones of the open ends of the channel and are structured to facilitate connection to and retention of various fishing tackle components. Such tackle components may be of the type, but are not limited to, tackle components conventionally connected to the leading end of the lure body. Similarly, tackle components typically connected at the trailing end of the lure body may be removably attached to the corresponding end of the securing member, which is accessible through the open end of the interior channel at the trailing end of the lure body. In at least one embodiment, the lure body is structured to receive a plurality of hooks secured thereto, at various positions along the length of the lure body, i.e., leading end, midsection, and/or trailing end, once again, via removable attachment to the securing member. As such, the securing member of the present invention serves as a skeleton or frame about which an essentially endless variety of lure body and/or tackle component configurations may be assembled, disassembled, and reconfigured as required to suit virtually any fishing condition encountered.

The interior channel and the securing member removably disposed therein are cooperatively dimensioned and configured to facilitate movable, sliding engagement therebetween. However, the channel and securing member are cooperatively configured to have sufficiently corresponding cross sectional configurations to substantially restrict rotational movement of the securing member when disposed within the channel. Such cooperative and at least partially corresponding cross sectional configurations of the channel and the securing member are generally defined by an oblong cross sectional configuration. More specifically, the cross sectional configuration of the channel may include a substantially oval or elliptical configuration extending along at least portion thereof, but in one embodiment along substantially the entire length thereof. Alternatively, the oblong configuration of the channel may be at least partially multisided, rather than elliptical or oval, and as such, may be accurately described as having a substantially rectangular cross sectional configuration.

In cooperation therewith, the securing member may also have what may be generally, but accurately, described as an oblong cross sectional configuration. Accordingly, the oblong configuration of the securing member substantially corresponds to the configuration of the channel in which it is removably disposed at least to the extent of having a major or long dimension and a minor or lesser dimension which are disposed in transverse relation to one another. As described in greater detail hereinafter, at least one embodiment of the present invention comprises the securing member having a cross sectional configuration wherein its longer or major cross sectional dimension is substantially the same as that of the channel and the shorter or minor cross sectional dimension of the securing member is substantially the same as the shorter or minor dimension of the channel. However, for the purpose of the present invention, variances in the corresponding cross sectional dimensions of the securing member and the channel define the channel and the securing member being "sufficiently corresponding" to prevent or at least restrict rotation of the securing member within the channel, when the securing member and lure body are operatively assembled.

Further, the oblong cross sectional configuration of the various embodiments of at least the channel may comprise an oval, elliptical, rectangular, polygonal, or other multisided configuration. Such corresponding, cross sectional configurations of the channel and a sufficiently corresponding oblong cross sectional configuration of the securing member will significantly restrict rotation of the securing member once disposed within and extending through the length of the interior channel. Once assembled, the tackle components of the types generally set forth above, which are secured to the opposite, leading or trailing ends of the securing member will automatically assume a transverse or at least generally perpendicular orientation relative to the major or longer dimension of the channel and securing member. As a result, passage of the tackle components connected to either of the opposite ends of the securing member will be prevented from passing into or through the cross sectional configuration of the channel. The securing member will thereby be maintained in a desired, operative position within the channel on the interior of the body section of the lure body with which it is associated.

As set forth in greater detail hereinafter, the structural characteristics of the securing member may vary, dependent at least in part on the intended application or specific structure of the lure body with which it is used. More specifically, one embodiment of the securing member includes an elongated loop-type structure formed of steel spring wire or other appropriate material having sufficient strength to facilitate and maintain connection to the aforementioned tackle components. Such a loop-type structure may further comprise an access opening defined by separated or separable correspondingly disposed end portions of the loop-type structure and/or configuration. This access opening formed in the loop-type structure allows for the various tackle components to be easily connected thereto, such as when it is desired to assemble or change the various tackle components relative to the lure body. Moreover, while the loop-type securing member will generally have a substantially linear or straight line configuration along its length, at least one embodiment may include an angled, bent and/or enlarged configuration at one end thereof. Such differences in the configuration of the loop-type securing member better facilitates the adaptation of the securing member to body sections comprising different shapes, sizes, etc., with which is used.

Alternatively, the structural features of the securing member may comprise its formation from a solid metallic or other appropriately strong and/or at least partially rigid material extending substantially entirely or only partially along the length of the securing member. When only a portion of the length of the securing member is formed from a solid material, the remaining portion thereof may be structured into a loop segment similar to the loop-like structure as described above. In this latter embodiment, the access opening may be disposed along the length of the loop segment. In contrast, when substantially the entire length of the securing member is formed from a solid material, the opposite ends thereof are apertured or otherwise structured to facilitate connection of the various tackle components to both the leading and trailing opposite ends as will be more apparent hereinafter.

As set forth above, the lure body and more specifically the at least one body section thereof may be converted in function and appearance by removably connecting one or more tackle components, such as, but not limited to, diving bills, additional hook(s), connectors, etc., to various portions thereof. Depending on the function of the tackle component, it may be connected to an intermediate portion of the body section between the leading and trailing ends of the lure body. Accordingly, the present invention includes the provision of at least one, but possibly a plurality of attachment openings formed in the body section and being disposed, dimensioned and configured to receive any one of a plurality of tackle components therein. As set forth above such tackle components may be intermediately disposed hook structures, diving bills, etc.

Therefore, the convertible lure assembly of the present invention also includes a tackle component assembly comprising at least one, but in at least some embodiments, comprises a plurality of tackle components of the type set forth herein. Further, each of the one or more tackle components include a connecting portion having an aperture or other appropriate structure associated therewith. The connecting portion of each lure assembly is capable of passing into at least one of the attachment openings such that the connecting portion is disposed in an aligned relation with the interior channel. As such, the connecting portion of the one or more tackle components is cooperatively dimensioned, configured and disposed, when aligned with the interior channel, to receive a portion of the securing member therethrough or otherwise in retained relation with the connecting portion. Therefore, any one of the removably connected lure assemblies can be easily and quickly connected or replaced by disposing the securing member at least partially outward from the interior channel, due to a sliding engagement there between. Once so disposed, a selected tackle component is inserted into an appropriate attachment opening until the connecting portion thereof is aligned with the channel. Repositioning of the securing member into the interior of the channel will serve to dispose the securing member in removable retaining relation to the connecting portion of the one or more tackle components.

Yet another embodiment of the convertible lure assembly of the present invention comprises the lure body including at least two body sections wherein one or both of the body sections include an interior channel with the aforementioned oblong cross sectional configuration extending along the lengths thereof. As also set forth above, the cross sectional configurations of the securing members and respective ones of the channels are sufficiently corresponding to restrict rotation of the securing members within the respective channels. Further, the securing members and channels are cooperatively dimensioned and configured to removably dispose each of the securing members in the corresponding channel. As a result, adjacently disposed body sections may be removably interconnected to one another such as by removably interconnecting corresponding ends of the securing members associated therewith.

It is noted that the lure body may comprise more than two body sections wherein each of the plurality of body sections defining the lure body are movably interconnected to one another. Accordingly when each of the plurality of body sections includes the aforementioned interior elongated channels having cooperatively dimensioned and configured securing members removably disposed therein, the structures thereof will be substantially the same as described above, wherein the lure body comprises at least a single body section. As a result, the cooperative structuring of each of the securing members and corresponding ones of the channels associated with each body section facilitates a quick, easy and efficient conversion of the function, structure and appearance of the lure assembly. Such conversion is accomplished by enabling the removable connection and replacement of any of a plurality of fishing tackle components which the lure body is associated.

Moreover the convertible lure assembly of the present invention comprises a sleeve having a cross configuration substantially corresponding to that of the channel in which it is disposed. As such, the sleeve extends along at least a portion of the corresponding channel and is dimensioned to allow passage of securing member through the sleeve. The sleeve may be formed from a metallic or other appropriate material having sufficient rigidity and/or other physical properties which restrict wear or deterioration of the corresponding channel and/or body section. Such deterioration may be typically caused by repetitious insertion and removal of the securing member relative to the channel such as when the body section is formed from a less durable material such as, but not limited to, wood.

Other structural characteristics of the various embodiments of the lure assembly of the present invention include the body section(s) being formed from any of a variety of materials including, but not limited to, plastic, wood, metal, composite materials, etc. Further each of the one or more body sections may comprise a substantially solid construction, except for the aforementioned channel, or at least partially hollow construction. Moreover, different manufacturing techniques may be used in the formation of the body section(s). By way of example only, when a body section is formed from a plastic material it may be injection molded. When formed in this manner, one or more reinforcing segments, such as strips or particles of appropriate reinforcing material, may be integrally or otherwise incorporated into the body section so as to increase the strength thereof and accordingly extend the operable life of the body section so formed.

Therefore, the various embodiments of the convertible fishing lure assembly of the present invention overcomes many of the problems and disadvantages associated with known or conventional fishing lures, such as crank bait type lures, especially, but not exclusively, relating to the ability to quickly and easily change the appearance, structure and performance characteristics thereof.

These and other objects, features and advantages of the present invention will become clearer when the drawings as well as the detailed description are taken into consideration.

### Brief Description of the Drawings

For a fuller understanding of the nature of the present invention, reference should be had to the following detailed description taken in connection with the accompanying drawings in which:
Figure 1 is a longitudinal sectional view of a non-claimed embodiment of the convertible lure assembly in accordance with the present disclosure.
Figure 1A is a longitudinal sectional view of another embodiment of the convertible lure assembly in accordance with the present disclosure illustrating a sleeve.
Figure 2 is a longitudinal sectional view of yet another embodiment of the convertible lure assembly in accordance with the present disclosure.
Figure 3 is a collection of structural variations of a securing member which can be used with any of the embodiments of a lure assembly in accordance with the present disclosure.
Figure 4 is a longitudinal cross sectional view of yet another non-claimed embodiment of a lure assembly in accordance with the present disclosure, wherein the body of the lure assembly comprises plurality of body sections.
Figure 5 is a perspective, exploded view of the embodiment of Figure 4 in an unassembled form.
Figure 6 is a collective view representing some, but not all, of different possible sizes and configurations of a body of a convertible lure assembly in accordance with the present disclosure.
Figure 7 is a longitudinal sectional view of yet another non-claimed embodiment of the convertible lure assembly in accordance with the present disclosure in partially assembled form.
Figure 7A is a detailed view in partial cutaway of structural features of the embodiment of Figure 7.
Figure 8 is a perspective interior view of a lure and tackle storage and carrying assembly specifically structured to contain and organize various replaceable parts and tackle components of a plurality of convertible lure assemblies in accordance with the present disclosure.

Like reference numerals refer to like parts throughout the several views of the drawings.

### Detailed Description of the Preferred Embodiment

As represented in the accompanying drawings, the present invention is directed to a convertible fishing lure assembly generally indicated as 10 and comprising a body 12 having at least one body section 14. The body section 14 includes an elongated, interior channel 16 having oppositely disposed open ends including a leading open end 18 and a trailing open end 20.

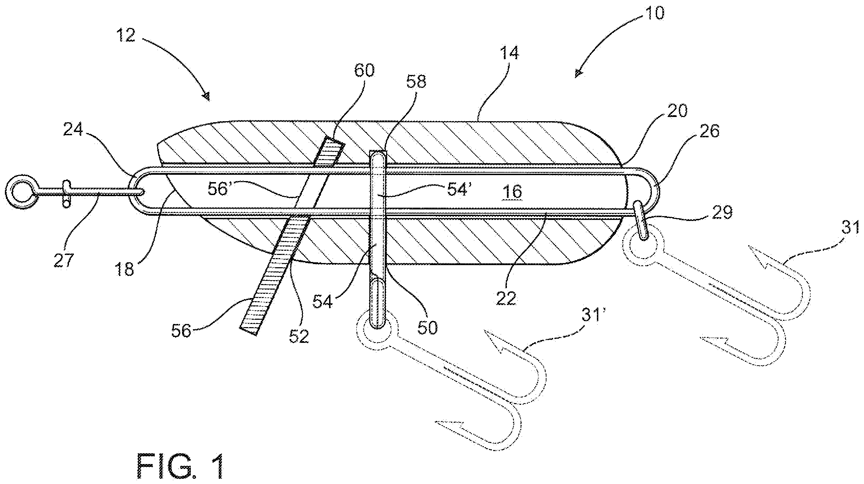

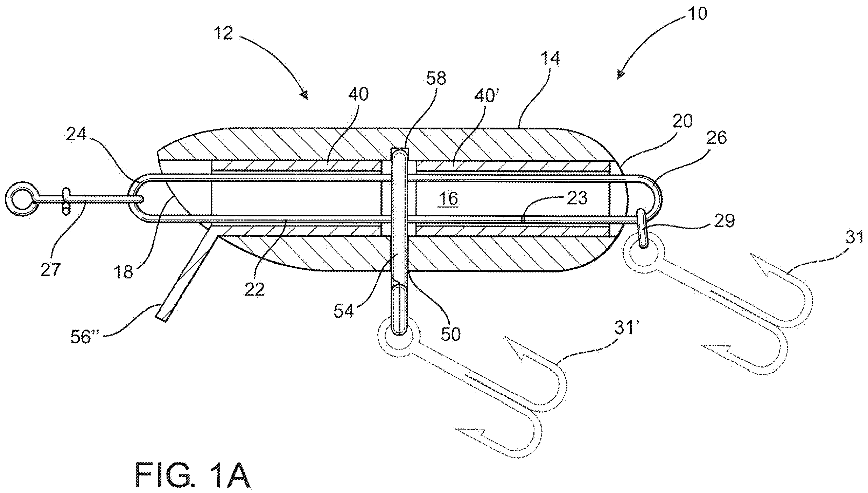

In addition, the convertible lure assembly 10 includes a securing member 22 having an elongated configuration of sufficient dimension to dispose opposite ends of the securing member 22, as at leading end 24 and trailing end 26, adjacent the corresponding open ends 18 and 20 of the channel 16. Moreover, the securing member 22 is of sufficient dimension such that the opposite ends 24 and 26 extend at least partially outward from the corresponding open ends 18 and 20. As such, both the leading and trailing ends 24 and 26 of the securing member 22 are accessible and are disposed and structured for removable attachment of any of a variety of fishing tackle components including, but not limited to, various types of connecting structure 27 and 29. In turn, leaders, fishing line, etc., may be connected to the leading end 24 of the securing member 22, such as, via snap connector 27. Moreover, the securing member 22 may serve to interconnect a tackle component such as, but not limited to, a fish hook 31, to the trailing end 26, such as is demonstrated in Figures 1 and 1A.

In at least some embodiments of the convertible fishing lure assembly 10, the securing member 22 is slidably positioned on the interior of the channel 16. However, the channel 16 and the securing member 22 are cooperatively configured to have "sufficiently corresponding" cross-sectional configurations to substantially restrict rotational movement of the securing member 22 when disposed in the interior of the channel 16. Such cooperative and at least partially corresponding cross-sectional configurations of the channel 16 and securing member 22 are generally defined by each having an oblong cross-sectional configuration. More specifically, the cross-sectional configuration of the channel 16 may include a substantially oval or elliptical configuration extending along at least a portion thereof. However, in one or more embodiments the oval or elliptical cross-sectional configuration of the channel 16 extends along the entire length thereof. Alternatively, the oblong configuration of the channel 16 may be at least partially multi-sided, rather than truly elliptical or oval. Such a multi-sided configuration may be at least partially defined by the opposite, lateral, interior surfaces 16' of the channel 16 having a linear rather than curvilinear configuration, as represented throughout the figures.

In cooperation therewith, the securing member 22 may also have what may be generally, but accurately, described as an oblong cross-sectional configuration. Moreover, the oblong configuration of the securing member 22 may be at least partially defined by a major or longer dimension and a minor or lesser dimension, which are disposed in transverse relation to one another. Accordingly, the "substantially corresponding" configurations of the channel 16 and securing member 22 can be further described as the securing member 22 having a cross-sectional configuration with a major or longer cross-sectional dimension being substantially the same as that of the channel 16. Similarly, the shorter or minor cross-sectional configuration of the securing member 22 is substantially the same as the shorter or minor cross-sectional dimension of the channel. It is again emphasized that the "sufficiently corresponding" configurations of the channel 16 and securing member 22 is such as to prevent or at least restrict rotation of the securing member 22 within the channel, while still allowing a sliding insertion and removal of the securing member 22 relative to the interior of the channel 16.

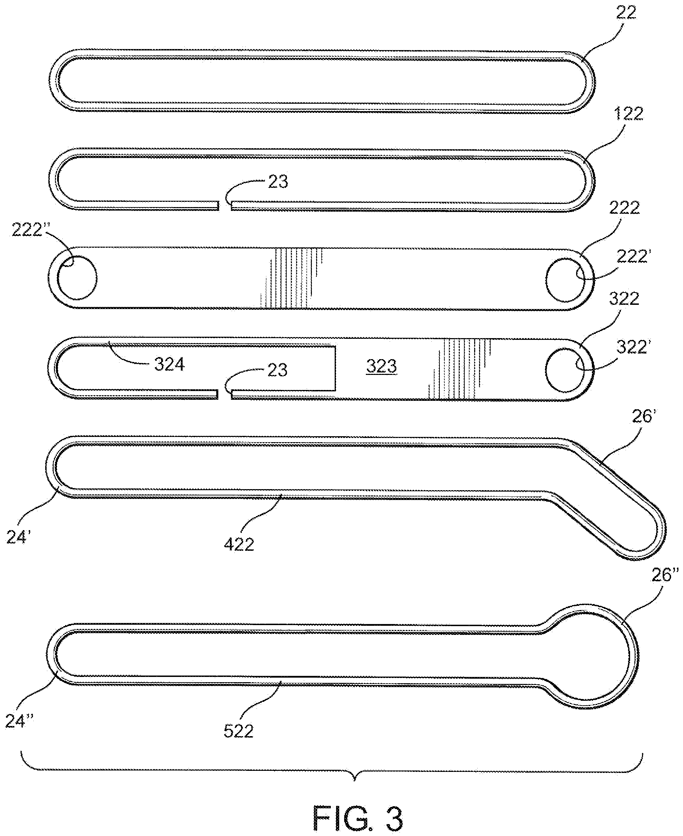

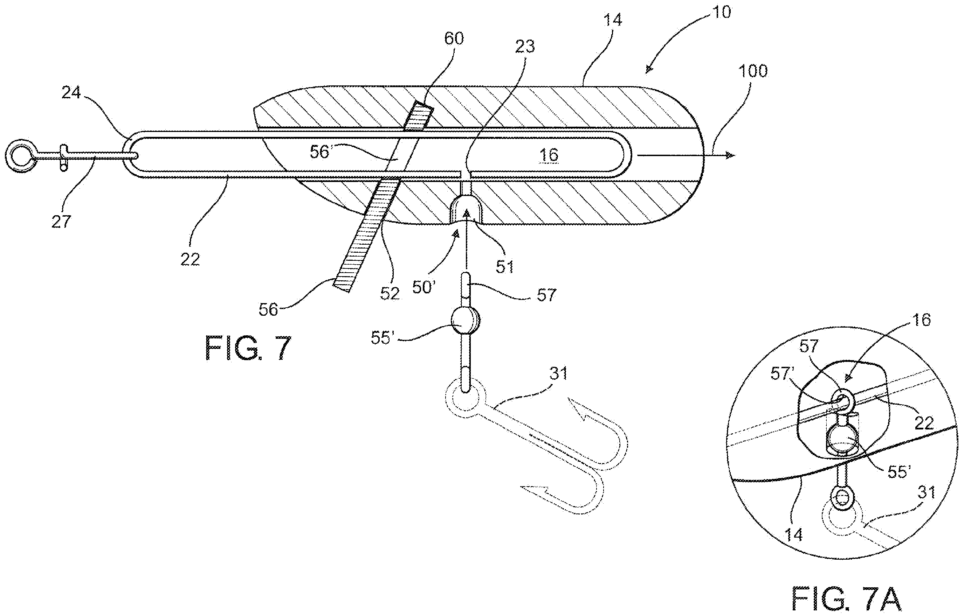

With primary reference to Figures 3, the structure of the securing member 22 may vary and still be capable of being used with any of the embodiments of the body 12 and/or body sections 14, 14', etc. Accordingly, as represented in Figure 3, the securing member 22 may include an elongated loop-type structure and configuration, wherein the loop of the securing member 22 is completely closed. Alternatively, the securing member 22 may include an access opening, as at 23, defined by at least a minimal separation of the loop configuration of the securing member 122. In use, the various tackle components are connected to the continuous securing member 22 by being "snapped on" such as by a snap connector 27, as represented in Figures 1 and 1A. However, when utilizing the securing member 22 has an access opening 23 as at 122, it may be at least partially removed from the interior of the channel 16, as represented in Figure 7, until the access opening 23 is exposed on an exterior of the channel 16. When so exposed, an appropriate tackle component, such as, fishing hooks 31, 31' and/or connectors 27, 29 may pass through the access opening 23 and along the remainder of the securing member 22, 122, etc.

In yet another embodiment, the securing member 222 is defined by substantially solid material construction wherein the opposite ends thereof include connecting opening as at 222' and 222". Yet another embodiment of the securing member is represented as 322, wherein at least a portion of the securing member is formed from a solid construction as at 323 and a remainder of the securing member 322 includes a loop segment 324. The loop segment 324 also may include the access opening 23 or a connecting opening 322' for attachment to various tackle components, as desired by the user including the connecting structures 27, 29 and/or the fishing hooks 31, 31', as well as a variety of other types of fishing tackle components, as will be explained in greater detail hereinafter.

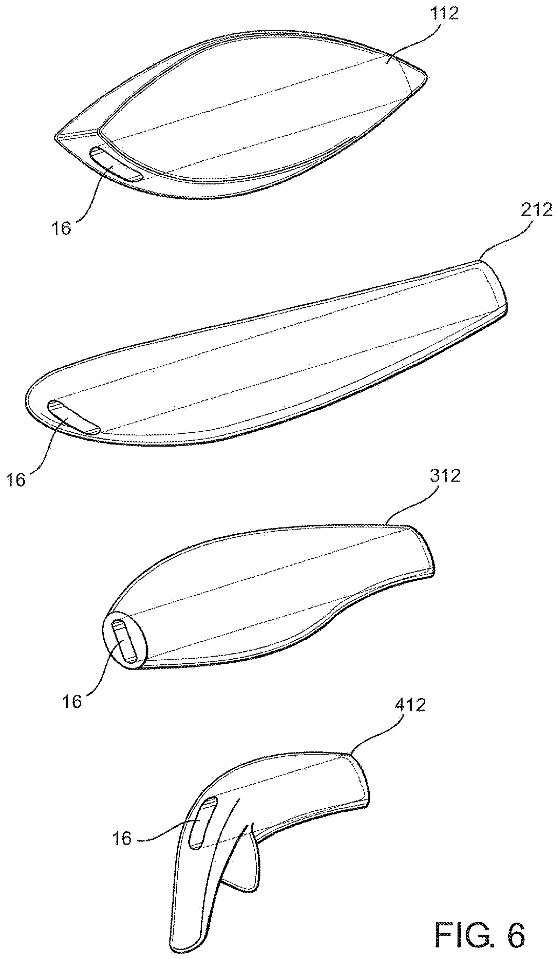

With further regard to Figure 3, securing members 422 and 522 may also have the loop-type configuration similar to that of the securing members 22 and 122. However, in these embodiments, the structural modification of each includes an end portion, as at 26' and 26", respectively, having a different configuration. More specifically, the securing member 422 includes an angled trailing end portion 26', where as the securing member 522 includes an enlarged end portion 26". Each of these end portions 26' and 26" may be adaptively configured to correspond to various sizes and/or shapes of the plurality of lure bodies or lure body sections with which they may be used, such as those of the type represented in Figure 6. As a result, the trailing ends 26' and 26" will be appropriately positioned relative to portions of a correspondingly shaped lure body, in order to facilitate the attachment of different fishing tackle components thereto. While the trailing ends 26 and 26" are illustrated in particular configurations, the opposite or leading ends of these or other securing members, as at 24' and 24" could also have a modified configuration or orientation, other than the represented straight line configuration. In addition, all of the different embodiments of a securing member in accordance with the present disclosure can be formed of spring steel or other appropriate material having sufficient strength, rigidity or other physical characteristics appropriate for the use of the securing member in combination with the rest of the convertible fishing lure assembly 10.

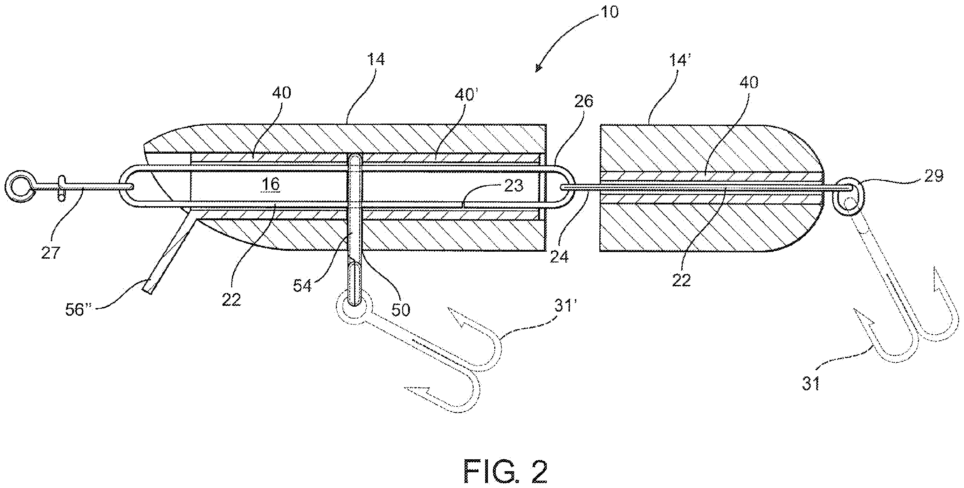

With primary reference to Figures 1A and 2, yet another embodiment of the convertible fishing lure assembly 10 of the present invention comprises at least one sleeve 40 and/or 40' disposed in one or more of the body sections 14 and 14' of the body 12. As clearly indicated in Figure 2, the body 12 may include a plurality of body sections 14 and 14' or a single body section 14, as represented in Figures 1 and 1A. More specifically, each sleeve 40 and/or 40' has a cross-sectional configuration substantially corresponding to that of the channel 16 in which it is disposed. As such, each of sleeves 40, 40' extend along at least a portion of the corresponding channel 16 and are dimensioned to allow passage of the securing member 22 through the interior of the sleeve 40, 40'. Each of the sleeves 40, 40' may be formed of a metallic or other appropriate material having sufficient rigidity or physical properties which restrict wear or deterioration of the corresponding channel 16 and/or other parts of the body section 14, 14'. Such deterioration may be typically caused by repeated insertion and removal of the securing member 22 relative to the channel 16 and in particular when the body section 14, 14' is formed from a less durable material, such as, but limited to wood.

As set forth above, the lure body 12 includes one or more body sections 14, 14', each of which may be converted in function, structure and/or appearance by removably interconnecting one or more tackle components thereto. As set forth above, such tackle components may include the connecting structure 27, 29 the fishing hooks 31, 31' which are typically connected to the leading or trailing ends of the securing member 22, as at 24 or 26. However, depending on the function of the tackle component as well as the fishing conditions to which the lure assembly 10 is subjected, it is sometimes desirable to removably attach various tackle components to one or both of the body sections 14 and 14' at an intermediate portion thereof, such as between the leading and trailing ends of the lure body 12.

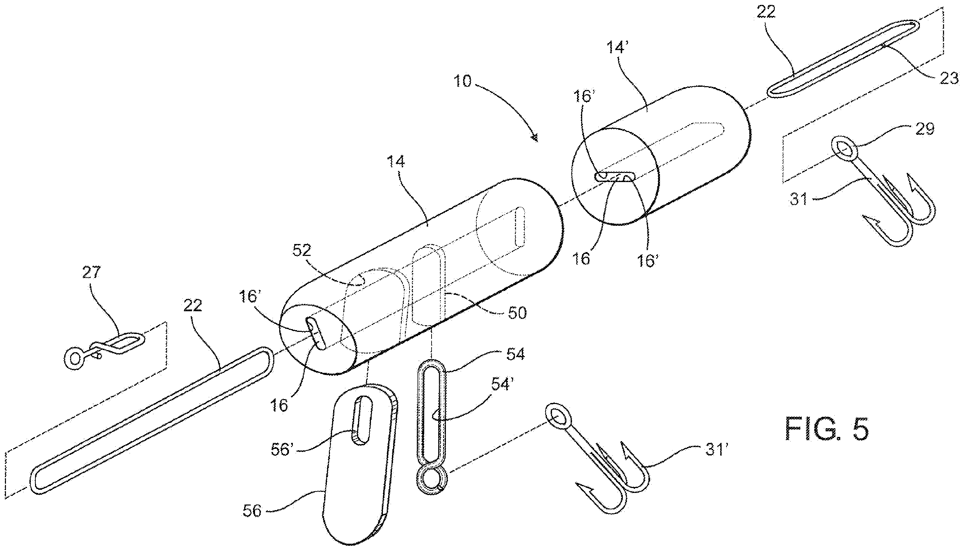

Therefore, in at least one embodiment, a body section 14 includes one or a plurality of attachment openings 50 and/or 52 formed therein. The attachment openings 50 and/or 52 are disposed, dimensioned and configured to receive any one of a plurality of tackle components therein such as connecting portion 54 used to interconnect fishing hooks 31' to the body section 14. Also, other tackle components such as a diving bill 56 may be interconnected to the body section 14 by being inserted a portion of the diving bill 56 into the attachment opening 52. Moreover, certain ones of the separate connecting portions 54 have an aperture 54' dimensioned and configured to pass into a corresponding attachment opening 50 and into substantial alignment with the interior channel 16, to facilitate connection of a hook 31' to the body section 14. As illustrated in Figure 5, the connecting portion 54 comprises a snap ring configuration, however, it is understood to be within the scope and intent of the present application for the convertible lure assembly 10 to comprise any of a plurality of connecting portions 54, such as split rings, swivel 55, such as is illustrated in Figure 7, etc. Alternatively, in at least one embodiment, a tackle component comprising a one piece construction, such as diving bill 56, includes an opening or aperture 56' disposed in aligned relation with the interior channel 16.

It is understood to be within the scope and intent of the present application for a convertible lure assembly 10 to utilize any of a plurality of different diving bill configurations dictated by different fishing conditions. By way of example, a longer, broader bill oriented approximately in line with the length of a lure body is employed to cause a lure to dive deeper, whereas a shorter, thinner bill oriented at a steeper angle relative to the lure body will cause the lure to run shallow. As yet one other example, a "chugger" type lure comprises a bill structured to splash water along the surface in front of the lure as it is retrieved, so as to attract surface feeding species of fish. Additionally, variations in the length, width, depth, and contours of a diving bill 56 will necessary effect the action of the lure in the water, and the present application does not contemplate any limitation on diving bill configurations which may be employed with the convertible lure assembly 10.

Accordingly, the separate connecting portions 54 of one or more of the tackle components and the one piece tackle components 56 are cooperatively dimensioned, configured and disposed, within corresponding ones of the attachment openings 50 and 52 such that the apertures 54' and 56' associated therewith are aligned with the interior channel 16. This alignment allows the securing member 22 to pass through the channel 16 as well as through the respective apertures 54' and 56' of the corresponding connecting portion 54 and tackle component 56. The securing member 22 will thereby serve to securely retain and stabilize the tackle components and/or connecting members 50, 56 in an operative orientation relative to the corresponding body section 14. Additional stability is added to at least some embodiments by including an interior recess as at 58 and 60. Such interior recess 58 and 60 are in substantially linear alignment with the attachment opening 50 and 52 respectively so as to engage and at least partially retain the innermost end of the corresponding connecting portion 54 and/or tackle component 56. In at least one embodiment, connecting portion 54 comprises a coating of a resilient material in order to provide a snug friction fit of the connecting member 54 within attachment opening 50 and interior recess 58. Any of a number of polymeric materials may be employed as a coating for connecting portion 54.

Positioning of the sleeves 40 and 40' in channel 16 is represented in Figures 1A and 2. As shown in the figures, the corresponding ends of the sleeves 40 and 40' may be disposed in confronting relation with a connecting portion 54, thereby providing stability to the placement of the connecting portion 54 when inserted into the channel 16 intermediate the ends of the body section 14. However, when the recess 58 is provided within the channel 16 to receive and retain the inner end of the connecting portion 54, the corresponding ends of the sleeves 40 and 40' may be at least partially spaced from the connecting portion 54, as represented in Figure 1A. Also, a tackle component, such as the diving bill 56", may be integrally secured to one of the sleeves 40 and be attached to the body section 14 with the sleeve 40, as illustrated in Figures 1A and 2, rather than a diving bill 56 being independently attached to the body section 14, as is illustrated in Figure 1.

As illustrated throughout the figures, the body 12 may include at least one body section 14 or a plurality of interconnecting body sections 14, 14', etc. Accordingly, once assembled and in use, the tackle components connected to the leading and trailing end of the body sections 14, 14' etc., will assume a substantially transverse orientation to the corresponding securing members 22. By way of example, and as represented in Figures 1 and 1A, the snap connector 27 once connected to the leading end 24 of the securing member 22 will normally, i.e., automatically, assume a transverse relation thereto. Similarly, the connector 29 as well as the corresponding fishing hook 31 will also "automatically" assume a transverse dimension to the trailing end 26 of securing member 22.

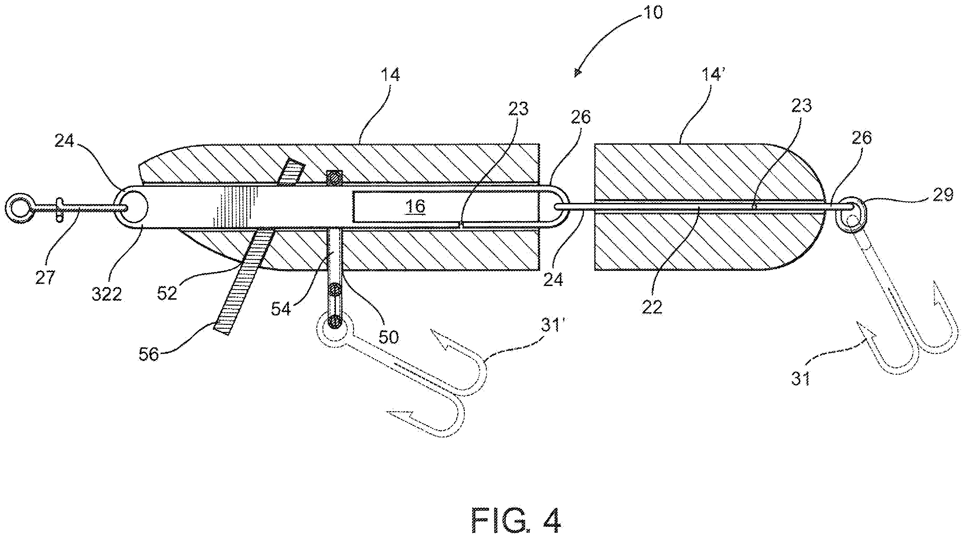

With regard to lure bodies having more than one body section as at 14 and 14', as represented in Figure 4, interconnecting securing members will also automatically or typically assume a transverse relation to one another. Such an automatic or normal transverse orientation of the various tackle components 27 and 29 will prevent or significantly restrict these components from passing into or through corresponding leading and trailing ends of the channel 16, as previously stated. Similarly, as represented in Figures 2 and 4, the corresponding ends of the securing members 26 and 24 will be automatically transversely oriented relative to one another. Similarly, in at least one embodiment, the oblong cross-sectional configuration of the channels 22 of adjacent ones of interconnected body sections 14 and 14' are also disposed in substantially transverse relation to one another as well as the securing members 22 contained therein.

As represented in Figure 6, the bodies of the convertible lure assembly 10 can assume a variety of different sizes and configurations, wherein the lure bodies represented in Figure 6 are examples only of a much larger number of lure bodies having a larger variety of sizes, configurations, etc. As one example, lure body 112 comprises a wider transverse configuration, wherein the channel 16 extends there through in a manner illustrated in Figure 6. In contrast, the lure body 212 includes a substantially elongated, somewhat linear configuration, however, once again, the channel 16 extends there through in the manner indicated. In yet another embodiment, the lure body 312 demonstrates yet another variation in size and configuration, wherein the channel 16 extends through a substantially central portion thereof as indicated. One example of a more pronounced structural modification includes a lure body 412 having a severely angled leading portion, such as, a lure having an integral diving bill, wherein the central channel 16 extends linearly through the upper or main portion of the body 412, once again, as illustrated in Figure 6.

Figure 7 represents a non-claimed embodiment of a convertible lure assembly 10 in accordance with the present disclosure. More in particular, as illustrated in the embodiment of Figure 7, a tackle component such as a hook 31 is connected to body section 14 at a location intermediate thereof. In addition, the fish hook 31 is connected to a modified attachment opening generally indicated as 50', wherein the connecting portion 55 is in the form of a swivel connector. As such, connecting portion or swivel connector 55 includes a main swivel member 55' and a leading member 57 having an aperture 57'. Accordingly, the attachment opening 50' includes an enlarged entry 51 shaped and dimensioned to accommodate placement of the swivel 55'. As a result the leading portion 57 will pass through the enlarged opening 51 into alignment with the access opening 23 formed in the securing member 22. While still aligned, the securing member 22 will be moved in the direction indicated by arrow 100, thereby serving to pass a portion of the securing member 22 through the aperture 57' and thereby connect the leading portion 57 onto the securing member 22 in the manner illustrated in Figure 7A. This embodiment also disclose a diving bill 56 passing through attachment opening 52 and having a central aperture 56' aligned with the channel 16 while the its inner end is disposed in recess 60. A trailing hook 31 may be incorporated into the embodiment of Figure 7, however, in this instance, the hook 31 is mounted to the securing member 22 and then securing member 22 is inserted into the body section 14 from the rear, such that access opening 23 is disposed nearer the front of the body section 14 when the securing member 22 is fully inserted therein.

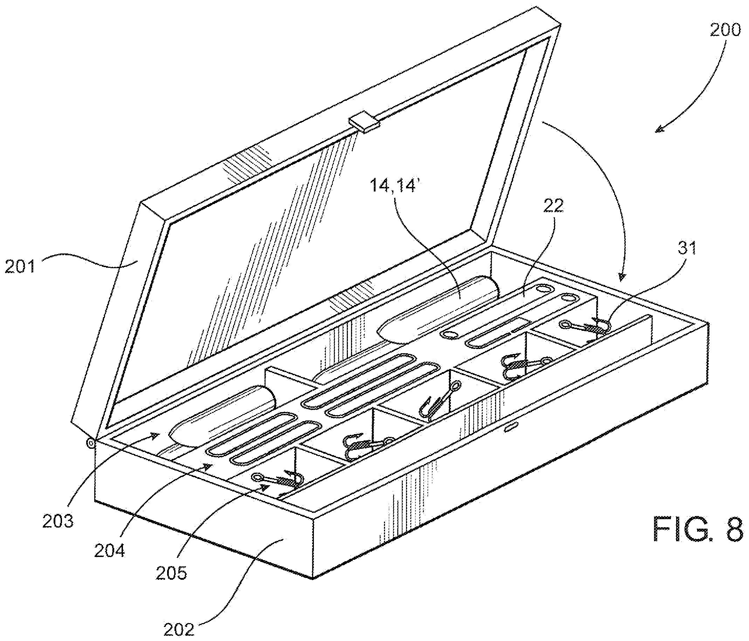

Figure 8 discloses a non-claimed embodiment of a tackle box or like lure/tackle carrying assembly 200, including a closeable lid 201 and a base portion 202. The base 202 includes a plurality of segregated compartments arranged in rows or other relative orientations as at 203, 204 and 205. Each of the rows includes a plurality of compartments, as indicated, which are dimensioned and configured for the containment of various portions of the convertible lure assembly 10 of the present invention. By way of example, the row 203 may include a plurality of compartments each having a different dimension and/or configuration, wherein the compartments are adapted to retain a plurality of body sections 14, 14' of different sizes and configurations. Row 204, by way of further example, may include a plurality of compartments which are adapted to a hold and retain a plurality of securing members 22 which may have varying structural configurations and/or dimensions, as represented in Figures 3 and 8. Row 205 may include a plurality of differently sized and configured compartments intended for the placement of a plurality of tackle components, such as hooks 31, which collectively define a tackle assembly. As is well known, the mingling of fish hooks in a common compartment or area will invariably result in there entanglement. As a result, the number of compartments in the row 205 can vary to accommodate a relatively large number of fish hooks or other appropriate tackle components defining the tackle assembly.

In one further embodiment, a bag or pouch is provided to store and/or transport securing members 22, tackle components, such as hooks 32, diving bills 56, etc., which a shore or bank fisherman can easily carry in a pocket or attach to a belt. Further, the shore or bank fisherman can carry a plurality of body sections 14, 14' of different sizes and configurations in another pocket such that he or she is free to travel along a shore or bank to fish, while having all of the components required to assembly a convertible lure assembly 10 to accommodate any of a wide variety of fishing conditions which he or she may encounter.

Since many modifications, variations and changes in detail can be made to the described embodiments of the invention, it is intended that all matters in the foregoing description and shown in the accompanying drawings be interpreted as illustrative and not in a limiting sense. Thus, the scope of the invention should be determined by the appended claims and their legal equivalents.

## Claims

1. A fishing lure assembly (10) comprising:
a lure body (12) including at least one body section (14) having an interior portion thereof,
said one body section (14) including a channel (16) extending longitudinally through said interior portion and terminating in oppositely disposed open ends (18, 20),
said channel (16) comprising an elongated configuration defining a channel length along a maximum dimension of said one body section (14) between said oppositely disposed open ends,
said channel (16) further comprising an enclosed configuration along a majority of said channel length through said interior portion of said one body section (14) between said oppositely disposed open ends,
a securing member (22) removably disposable within said channel (16) and dimensioned to dispose opposite ends (24, 26) of said securing member (22) in accessible relation to said open ends of said channel (16), wherein said opposite ends of said securing member (22) are structured to simultaneously extend at least partially outward from a different one of said oppositely disposed open ends of said channel (16),
a sleeve (40, 40') disposed within and extending along at least a portion of a length of said channel (16), said sleeve (40, 40') including a cross sectional configuration corresponding to said channel (16) and being dimensioned to removably receive said securing member (22) there through, wherein said sleeve (40, 40') is formed of a substantially rigid material,
said channel (16) and said securing member (22) having sufficiently corresponding cross sectional configurations to restrict rotation of said securing member (22) within said channel (16),
each of said opposite ends of said securing member (22) disposed and structured for removable and replaceable interconnection of at least one tackle component thereto,
at least one other tackle component, said one body section (14) comprising at least one attachment opening (50, 52) formed therein in communication with said channel (16), wherein said attachment opening is dimensioned and configured to receive said at least one other tackle component therein,
said at least one other tackle component comprising a connecting portion (54) having an aperture (54'), said connecting portion (54) being removably and replaceably disposed into said attachment opening such that said aperture (54') is in an aligned relation with said channel (16), and said aperture (54') being dimensioned to receive a portion of said securing member (22) therethrough in a retaining engagement with said at least one other tackle component.

2. The fishing lure assembly (10) as recited in claim 1 wherein said securing member (22) comprises an elongated loop structure, each of said opposite ends of said loop structure disposed and structured for removable connection of said at least one tackle component.

3. The fishing lure assembly (10) as recited in claim 2 wherein said elongated loop structure includes an access opening (23) disposed along a length thereof, said access opening (23) structured to facilitate connection of said at least one tackle component thereto.

4. The fishing lure assembly (10) as recited in claim 1 wherein:
said lure body (12) includes at least two body sections (14) movably interconnected to one another,
two securing members (22) each removably disposable within said channel (16) of a different one of said body sections (14) are provided,
each of said securing members (22) includes opposite ends (24, 26) disposed in accessible relation to said open ends of corresponding ones of said channels (16),
said sleeve (40, 40') is disposed within and extending along at least a portion of a length of each corresponding one of said channels (16), each of said sleeves (40, 40') including a cross sectional configuration substantially corresponding to said channel (16) and dimensioned to removably receive a corresponding one of said securing members (22) there through,
each of said sleeves (40, 40') and corresponding ones of said securing members (22) have sufficiently corresponding cross sectional configurations to restrict rotation of each of said securing members (22) within corresponding ones of said sleeves (40, 40'),
at least one of said body sections (14) comprises at least the one attachment opening (50, 52).

5. The fishing lure assembly (10) as recited in claim 4 wherein each of said cross sectional configurations of corresponding ones of said channels (16) and said securing members (22) comprise an oblong configuration.

6. The fishing lure assembly (10) as recited in claim 5 wherein said oblong configuration of each of said channels (16) extends along at least a majority of a length thereof.

7. The fishing lure assembly (10) as recited in claim 5 wherein said oblong cross sectional configuration of said channels (16) of adjacent ones of said body sections are disposed in substantially transverse relation to one another.

8. The fishing lure assembly (10) as recited in claim 4 wherein at least one of said securing members (22) comprises an elongated loop structure of sufficient length to dispose said opposite ends of said loop structure in accessible relation to corresponding ones of said open ends of a corresponding one of said channels (16).

9. The fishing lure assembly (10) as recited in claim 4 wherein at least one of said securing members (22) comprises a substantially solid material construction extending along at least a portion of a length thereof.

10. The fishing lure assembly (10) as recited in claim 4 wherein inwardly disposed ones of said opposite ends of said securing members (22) of adjacently disposed ones of said body sections (14) are movably connected to one another to at least partially define said body sections (14) being movably interconnected to one another.

## Patentansprüche

1. Angelköderanordnung (10), die Folgendes aufweist:
einen Köderkörper (12), der mindestens einen Körperabschnitt (14) mit einem inneren Teil davon aufweist,
wobei der eine Körperabschnitt (14) einen Kanal (16) aufweist, der sich in Längsrichtung durch den inneren Teil erstreckt und in gegenüberliegend angeordneten offenen Enden (18, 20) endet,
wobei der Kanal (16) eine langgestreckte Konfiguration aufweist, die eine Kanallänge entlang einer maximalen Abmessung des einen Körperabschnittes (14) zwischen den gegenüberliegend angeordneten offenen Enden definiert,
wobei der Kanal (16) weiter eine umschlossene Konfiguration entlang eines Hauptteils der Kanallänge durch den inneren Teil des einen Körperabschnittes (14) zwischen den gegenüberliegend angeordneten offenen Enden aufweist,
ein Sicherungsglied (22), welches entfernbar in dem Kanal (16) angeordnet werden kann und welches bemessen ist, um gegenüberliegende Enden (24, 26) des Sicherungsgliedes (22) in zugänglicher Beziehung zu den offenen Enden des Kanals (16) anzuordnen, wobei die offenen Enden des Sicherungsgliedes (22) so strukturiert sind, dass sie sich gleichzeitig zumindest teilweise aus einem unterschiedlichen einen der gegenüberliegend angeordneten offenen Enden des Kanals (16) erstrecken,
eine Hülse (40, 40'), die innerhalb des Kanals (16) angeordnet ist und sich zumindest einen Teil entlang einer Länge des Kanals (16) erstreckt, wobei die Hülse (40, 40') eine Querschnittskonfiguration aufweist, die dem Kanal (16) entspricht, und wobei sie dimensioniert ist, um in entfernbarer Weise das Sicherungsglied (22) dort hindurch aufzunehmen, wobei die Hülse (40, 40') aus einem im Wesentlichen steifen Material geformt ist, wobei der Kanal (16) und das Sicherungsglied (22) ausreichend entsprechende Querschnittskonfigurationen haben, um eine Drehung des Sicherungsgliedes (22) innerhalb des Kanals (16) zu verhindern,
wobei jedes der gegenüberliegenden Enden des Sicherungsgliedes (22) zur entfernbaren und ersetzbaren Verbindung von mindestens einer Angelgerätkomponente daran angeordnet und strukturiert ist,
zumindest eine weitere Angelgerätkomponente,
wobei der eine Körperabschnitt (14) zumindest einen Befestigungsöffnung (50, 52) aufweist, die darin in Verbindung mit dem Kanal (16) ausgeformt ist, wobei die Anbringungsöffnung so dimensioniert und konfiguriert ist,
dass sie die mindestens eine andere Angelgerätkomponente darin aufnimmt,
wobei die mindestens eine andere Angelgerätkomponente einen Verbindungsteil (54) aufweist, der eine Öffnung (54') hat, wobei der Verbindungsteil (54) entfernbar und ersetzbar in der Anbringungsöffnung angeordnet ist, so dass die Öffnung (54') in ausgerichteter Beziehung mit dem Kanal (16) ist, und wobei die Öffnung (54') so dimensioniert ist, dass sie einen Teil des Sicherungsgliedes (22) dort hindurch in einem Halteeingriff mit der mindestens einen anderen Angelgerätkomponente aufnimmt.

2. Angelköderanordnung (10) nach Anspruch 1, wobei das Sicherungsglied (22) eine langgestreckte Schleifenstruktur aufweist, wobei jedes der gegenüberliegenden Enden der Schleifenstruktur zur entfernbaren Verbindung der mindestens einen Angelgerätkomponente angeordnet und strukturiert ist.

3. Angelköderanordnung (10) nach Anspruch 2, wobei die langgestreckte Schleifenstruktur eine Zugangsöffnung (23) aufweist, die entlang einer Länge davon angeordnet ist, wobei die Zugangsöffnung (23) strukturiert ist, um eine Verbindung der mindestens einen Angelgerätkomponente damit zu ermöglichen.

4. Angelköderanordnung (10) nach Anspruch 1, wobei der Köderkörper (12) zumindest zwei Körperabschnitte (14) aufweist, die bewegbar miteinander verbunden sind,
zwei Sicherungsglieder (22) jeweils entfernbar in dem Kanal (16) eines unterschiedlichen einen der Körperabschnitte (14) vorgesehen sind, jedes der Sicherungsglieder (22) gegenüberliegende Enden (24, 26) aufweist, die in zugänglicher Beziehung zu den offenen Enden der entsprechenden einen der Kanäle (16) angeordnet sind,
die Hülse (40, 40') innerhalb jedes entsprechenden einen der Kanäle (16) angeordnet ist und sich entlang zumindest eines Teils einer Länge von jedem entsprechenden einen der Kanäle (16) erstreckt, wobei jede der Hülsen (40, 40') eine Querschnittskonfiguration aufweist, die im Wesentlichen dem Kanal (16) entspricht und bemessen ist, um in entfernbarer Weise ein entsprechendes eines der Sicherungsglieder (22) dort hindurch aufzunehmen,
wobei jede der Hülsen (40, 40') und die entsprechenden Sicherungsglieder (22) ausreichende entsprechende Querschnittskonfigurationen haben, um eine Drehung von jedem der Sicherungsglieder (22) innerhalb den entsprechenden Hülsen (40, 40') zu verhindern,
zumindest einer der Körperabschnitte (14) zumindest eine Anbringungsöffnung (50, 52) aufweist.

5. Angelköderanordnung (10) nach Anspruch 4, wobei jede der Querschnittskonfigurationen von entsprechenden Kanälen (16) und Sicherungsgliedern (22) eine längliche Konfiguration aufweisen.

6. Angelköderanordnung (10) nach Anspruch 5, wobei die längliche Konstruktion von jedem der Kanäle (16) sich entlang zumindest eines Hauptteils einer Länge davon erstreckt.

7. Angelköderanordnung (10) nach Anspruch 5, wobei die längliche Querschnittskonfiguration der Kanäle (16) von benachbarten Körperabschnitten im Wesentlichen in einer Querbeziehung zueinander angeordnet sind.

8. Angelköderanordnung (10) nach Anspruch 4, wobei zumindest eines der Sicherungsglieder (22) eine langgestreckte Schleifenstruktur von ausreichender Länge aufweist, um die gegenüberliegenden Längen der Schleifenstruktur in zugänglicher Beziehung zu entsprechenden einen der offenen Enden eines entsprechenden einen der Kanäle (16) anzuordnen.

9. Angelköderanordnung (10) nach Anspruch 4, wobei zumindest eines der Sicherungsglieder (22) eine im Wesentlichen volle Materialkonstruktion aufweist, die sich entlang zumindest eines Teils einer Länge davon erstreckt.

10. Angelköderanordnung (10) nach Anspruch 4, wobei innen angeordnete Enden der gegenüberliegenden Enden der Sicherungsglieder (22) von benachbart angeordneten Körperabschnitten (14) in bewegbarer Weise miteinander verbunden sind, um zumindest teilweise die Körperabschnitte (14) zu definieren, die bewegbar miteinander verbunden sind.

## Revendications

1. Ensemble de leurre de pêche (10) comportant :
un corps de leurre (12) comprenant au moins une section de corps (14) ayant une portion interne,
ladite section de corps (14) comprenant un canal (16) s'étendant longitudinalement à travers ladite portion interne et se terminant par des extrémités ouvertes opposées (18, 20),
ledit canal (16) comportant une configuration allongée définissant, entre lesdites extrémités ouvertes opposées, une longueur de canal le long d'une dimension maximale de ladite section de corps (14),
ledit canal (16) comportant en outre, à travers ladite portion interne de ladite section de corps (14) entre lesdites extrémités ouvertes opposées, une configuration fermée le long d'une majorité de ladite longueur de canal,
un élément de fixation (22) disponible de manière amovible à l'intérieur dudit canal (16) et dimensionné pour agencer des extrémités opposées (24, 26) dudit élément de fixation (22) dans une relation accessible auxdites extrémités ouvertes dudit canal (16), dans lequel lesdites extrémités opposées dudit élément de fixation (22) sont structurées pour s'allonger simultanément au moins partiellement vers l'extérieur depuis une extrémité respective desdites extrémités ouvertes opposées dudit canal (16),
un manchon (40, 40') disposé à l'intérieur et s'étendant sur au moins une partie d'une longueur dudit canal (16), ledit manchon (40, 40') comprenant une configuration en section transversale correspondant audit canal (16) et étant dimensionné pour y recevoir de manière amovible ledit élément de fixation (22), ledit manchon (40, 40') étant formé d'un matériau sensiblement rigide,
ledit canal (16) et ledit élément de fixation (22) ayant des configurations de section transversale se correspondant suffisamment pour restreindre la rotation dudit élément de fixation (22) à l'intérieure dudit canal (16),
chacune desdites extrémités opposées dudit élément de fixation (22) étant disposée et structurée pour y interconnecter de façon amovible et remplaçable au moins un accessoire de pêche,
au moins un autre accessoire de pêche,
ladite section de corps (14) comportant au moins une ouverture de fixation (50, 52) en communication avec ledit canal (16), dans lequel ladite ouverture de fixation est dimensionnée et configurée pour y recevoir ledit au moins un autre accessoire de pêche,
ledit au moins un autre accessoire de pêche comprenant une portion de raccordement (54) ayant une ouverture (54'), ladite portion de raccordement (54) étant disposée de façon amovible et remplaçable dans ladite ouverture de fixation de sorte que ladite ouverture (54') est dans une relation d'alignement avec ledit canal (16), et ladite ouverture (54') étant dimensionnée pour recevoir, à travers elle, une partie dudit élément de fixation (22) dans une relation de maintien dudit au moins un autre accessoire de pêche.

2. Ensemble de leurre de pêche (10) selon la revendication 1, dans lequel ledit élément de fixation (22) comprend une structure en boucle allongée, chacune desdites extrémités opposées de ladite structure en boucle étant disposée et structurée pour une connexion amovible dudit au moins un accessoire de pêche.

3. Ensemble de leurre de pêche (10) selon la revendication 2, dans lequel ladite structure en boucle allongée comprend une ouverture d'accès (23) disposée dans sa longueur, ladite ouverture d'accès (23) étant structurée pour y faciliter une connexion dudit au moins un accessoire de pêche.

4. Ensemble de leurre de pêche (10) selon la revendication 1, dans lequel :
ledit corps de leurre (12) comprend au moins deux sections de corps (14) interconnectées l'une à l'autre de manière mobile,
deux éléments de fixation (22) sont prévus, chacun étant disponible de façon amovible à l'intérieur dudit canal (16) d'une desdites sections de corps (14) correspondante,
chacun desdits éléments de fixation (22) comprend des extrémités opposées (24, 26) disposées dans une relation accessible audites extrémités ouvertes desdits canaux (16) correspondants,
ledit manchons (40, 40') est disposé à l'intérieur et s'étend le long d'au moins une partie d'une longueur de chacun desdits canaux (16) correspondants, chacun desdits manchons (40, 40') comprenant une configuration en section transversale correspondant sensiblement audit canal (16) et dimensionnée pour y recevoir de manière amovible un desdits éléments de fixation (22) correspondant,
chacun desdits manchon (40, 40') et les éléments correspondants des éléments de fixation (22) ayant des configurations de section transversale se correspondant suffisamment pour restreindre la rotation de chacun desdits éléments de fixation (22) à l'intérieur d'un desdits manchons (40, 40') correspondant,
au moins une des sections de corps (14) comprend au moins une ouverture de fixation (50, 52).

5. Ensemble de leurre de pêche (10) selon la revendication 4, dans lequel chacune desdites configurations en section transversale desdits canaux (16) et desdits éléments de fixation (22) correspondants comporte une configuration oblongue

6. Ensemble de leurre de pêche (10) selon la revendication 5, dans lequel ladite configuration oblongue de chacun desdits canaux (16) s'étend le long d'au moins une majorité de sa longueur.

7. Ensemble de leurre de pêche (10) selon la revendication 5, dans lequel lesdites configurations en section transversale desdits canaux (16) des sections de corps qui sont adjacentes sont disposées dans une relation sensiblement transverse l'une par rapport à l'autre.

8. Ensemble de leurre de pêche (10) selon la revendication 4, dans lequel au moins un desdits éléments de fixation (22) comprend une structure en boucle allongée de longueur suffisante pour agencer lesdites extrémités opposées de ladite structure en boucle en relation accessible aux extrémités ouvertes correspondantes d'un desdits canaux (16) correspondant.

9. Ensemble de leurre de pêche (10) selon la revendication 4, dans lequel au moins un desdits éléments de fixation (22) comprend une construction en matériau sensiblement solide s'étendant le long d'au moins une partie de sa longueur.

10. Ensemble de leurre de pêche (10) selon la revendication 4, dans lequel celles des extrémités opposées desdits éléments de fixation (22) qui sont disposées vers l'intérieur de celles des sections de corps (14) qui sont disposées de façon adjacente sont reliées de manière mobile l'une à l'autre pour au moins partiellement rendre lesdites sections de corps (14) interconnectées de manière mobile l'une à l'autre.
